# FASCICULE DE BREVET EUROPEEN

(11) **EP 3 742 037 B1**
(45) Date de publication et mention de la délivrance du brevet: **02.03.2022**
(21) Numéro de dépôt: 20175318.3
(22) Date de dépôt: 19.05.2020
(51) Int. Cl.: F16L 37/34, F16L 37/50, F16L 37/58, F16L 55/07

(54) **ÉLÉMENT FEMELLE DE RACCORD FLUIDIQUE, SOUS-ENSEMBLE DE RACCORDEMENT ET RACCORD COMPRENANT UN TEL ÉLÉMENT FEMELLE**
ANSCHLUSSBUCHSE EINES FLUIDANSCHLUSSES, UNTEREINHEIT ZUM ANSCHLIESSEN UND ANSCHLUSS, DER EINE SOLCHE ANSCHLUSSBUCHSE UMFASST
FEMALE ELEMENT FOR FLUID CONNECTOR, CONNECTION SUBASSEMBLY AND CONNECTOR INCLUDING SUCH A FEMALE ELEMENT

(30) Priorité: 20.05.2019 FR 1905263
(43) Date de publication de la demande: 25.11.2020
(73) Titulaire: Staubli Faverges, 74210 Faverges-Seythenex (FR)
(72) Inventeur: TIBERGHIEN, Alain-Christophe, 74320 SEVRIER (FR); DURIEUX, Christophe, 73200 GILLY SUR ISERE (FR); MARQUES-BARROCA, Serafim, 73460 FRONTENEX (FR)
(74) Mandataire: Lavoix

(56) Documents cités:
- EP-A1- 2 151 309
- EP-A2- 1 949 987
- DE-A1- 19 505 861
- US-A- 4 989 630

## Description

L'invention a trait à un élément femelle de raccord fluidique permettant de constituer, avec un élément mâle, un raccord permettant la jonction amovible de conduits de circulation d'un fluide, les conduits présentant potentiellement des défauts d'alignement.

En général, les moules d'injection, notamment d'injection de matière plastique, comportent au moins deux parties, l'une de ces parties étant un moule fixe et l'autre partie comprenant une coulisse mobile. Les deux parties de moules ne sont généralement pas parfaitement alignées. Ces moules comportent des circuits de refroidissement dans lesquels circule un fluide de refroidissement et qui communiquent en phase d'injection. Il convient donc d'accoupler et de désaccoupler ces circuits à chaque cycle d'injection de matière plastique. Il faut, en outre, garantir l'absence de fuite du fluide de refroidissement en configuration accouplée et en configuration désaccouplée, car des égouttures peuvent migrer vers les surfaces d'injection du moule en contact avec la matière injectée et nuire à la qualité de la pièce injectée.

Il est connu de recourir à un tuyau flexible, qui reste connecté en permanence aux circuits de refroidissement des deux parties du moule et qui s'accommode des mouvements et des défauts d'alignement des parties de moule. Cependant les flexibles s'usent rapidement et doivent être changés régulièrement pour prévenir les fuites accidentelles, ce qui est coûteux en termes de maintenance.

Il est connu de US 4 989 630 A de proposer un raccord rapide avec clapets anti-retour et clapets anti-débordement comportant deux raccords, le premier ayant un corps de raccord. Il comporte également un corps de clapet anti-retour, un corps de clapet anti-débordement, un boîtier de clapet anti-débordement, un ressort de clapet anti-retour, un ressort de boîtier de clapet anti-débordement et une tige. A l'intérieur du corps de l'accouplement se trouve une chambre du boîtier de la soupape anti-retour. Une chambre de clapet anti-retour est présente du côté de la connexion bout à bout au côté de la déconnexion par traction. La chambre du clapet anti-retour contient le corps du clapet et le ressort du clapet.

Il est connu de US-A-3 508 580 de proposer un raccord dit « rapide » permettant une connexion et une déconnexion rapides s'accommodant de défauts d'alignement limités entre deux éléments de raccord, en rendant un des éléments du raccord flottant dans un bâti. L'élément de raccord flottant est alors l'élément complémentaire avec soupape. Cependant, lors du désaccouplement, des égouttures restent sur les surfaces externes des éléments de raccord, ces surfaces étant de plus radialement exposées à l'extérieur, et les égouttures peuvent migrer vers les surfaces d'injection du moule.

C'est à ces problèmes qu'entend plus particulièrement remédier l'invention, en proposant un raccord avec protection contre les égouttures et qui est, en outre, facile à entretenir.

À cet effet, l'invention concerne un élément femelle de raccord apte à être accouplé avec un élément mâle pour la jonction fluidique amovible de deux conduits. L'élément femelle comprend un corps centré sur un premier axe central longitudinal et qui définit un volume interne de réception de l'élément mâle, un côté avant et un côté arrière. L'élément femelle comprend, en outre, un poussoir central solidaire longitudinalement du corps et disposé au sein du volume interne, ainsi qu'un tiroir mobile au sein du volume interne autour du poussoir central, entre une position avancée de fermeture, dans laquelle le tiroir coopère de manière étanche avec le corps et le poussoir central, et une position reculée d'ouverture.

Selon l'invention, le corps forme une collerette externe disposée autour du volume interne et présente une surface radiale externe, une face axiale avant et une face axiale arrière. La face axiale avant et la face axiale arrière sont parallèles et annulaires et font saillie radialement du reste du corps. La collerette externe comprend au moins deux passages, chaque passage étant ménagé à travers la collerette externe et reliant la surface radiale externe et le volume interne. Un joint d'étanchéité distal est logé dans le corps au niveau d'une surface radiale interne du corps, qui délimite le volume interne. Une face avant du tiroir en position de fermeture et le joint d'étanchéité distal sont disposés longitudinalement de part et d'autre des passages, alors que le joint d'étanchéité distal est situé à l'avant des passages.

Grâce à l'invention, lors du désaccouplement de l'élément femelle et de l'élément mâle, il est possible d'évacuer les égouttures de fluide de refroidissement contenues dans le volume interne, à l'avant du tiroir, à travers la collerette externe, vers l'extérieur afin que les égouttures ne puissent migrer vers les surfaces d'injection des moules tandis que pour l'accouplement, la collerette externe est adaptée à être montée avec possibilité de débattement perpendiculaire au premier axe central pour s'adapter aux défauts d'alignement des conduits à joindre. Les passages ménagés dans la collerette externe laissent passer un flux d'air comprimé, qui chasse les égouttures de fluide de refroidissement des surfaces externes de l'élément mâle, avant qu'il ne soit retiré du volume interne de la collerette. Le joint distal assure l'étanchéité entre le volume interne et l'élément mâle lorsque l'élément mâle coopère avec l'élément femelle, évitant la diffusion d'égouttures de fluide de refroidissement hors du volume interne de réception. En outre, le joint distal assure une fonction de raclage de la surface radiale externe de l'élément mâle lorsque celui-ci est extrait du volume interne de la collerette, lors du désaccouplement des éléments mâle et femelle du raccord.

Selon des aspects avantageux mais non obligatoires de l'invention, un tel élément femelle peut incorporer une ou plusieurs des caractéristiques suivantes, prises selon toute combinaison techniquement admissible :
- l'élément femelle comprend, en outre, un joint d'étanchéité avant logé sur la face axiale avant et un joint d'étanchéité arrière logé sur la face axiale arrière, le joint d'étanchéité avant et le joint d'étanchéité arrière étant centrés sur le premier axe central ;
- un plan médian d'une gorge distale logeant le joint d'étanchéité distal est disposé longitudinalement entre la face axiale avant et la face axiale arrière de la collerette ;
- chaque passage comprend un volume externe qui débouche sur la surface radiale externe de la collerette, ainsi qu'un volume de section réduite par rapport au volume externe, le volume de section réduite étant interne par rapport au volume externe ;
- en section dans un plan orthogonal au premier axe central, les parois délimitant le volume de section réduite sont évasées et divergent en direction du volume interne ;
- la collerette comprend deux passages qui sont répartis à 180° autour du premier axe central et en ce que chaque volume de section réduite couvre un secteur angulaire de 45° à 100° autour du premier axe central ;
- une largeur du volume de section réduite prise selon le premier axe central est au moins deux fois inférieure à une dimension orthoradiale du volume de section réduite ;
- un joint d'étanchéité proximal est logé dans le corps dans une gorge proximale débouchant sur une portion de surface radiale interne de même diamètre qu'une portion de surface radiale interne sur laquelle débouche une gorge distale dans laquelle est logé le joint d'étanchéité distal et en ce que, en position de fermeture du tiroir, le joint d'étanchéité proximal est radialement interposé entre le tiroir et le corps ;
- le corps délimite un volume annulaire par lequel chaque passage débouche dans le volume interne, un diamètre du volume annulaire étant supérieur au diamètre d'une portion de surface radiale interne sur laquelle débouche une gorge distale dans laquelle est logé le joint d'étanchéité distal ;
- l'élément femelle comprend un obstacle, bloqué en rotation par rapport au corps autour du premier axe central et s'étendant radialement à partir de la surface radiale externe de la collerette ;
- une distance axiale entre un plan médian d'une gorge logeant le joint d'étanchéité distal et la face avant du tiroir en position de fermeture est comprise entre 8 mm et 40 mm et
- le poussoir central présente une face avant plane et en ce que la face avant du tiroir et la face avant du poussoir sont affleurantes lorsque le tiroir est en position avancée de fermeture.

L'invention concerne également un sous-ensemble de raccordement, qui comprend un bâti et un élément femelle tel que mentionné ci-dessus, dans lequel le bâti délimite un conduit interne et un logement interne, le logement interne définissant un deuxième axe central longitudinal parallèle au premier axe central, l'élément femelle étant monté dans le logement interne du bâti avec possibilité de mouvement du corps dans le bâti radialement au deuxième axe central, avec la face axiale avant de la collerette externe en contact glissant étanche avec le bâti et la face axiale arrière de la collerette externe en contact glissant étanche avec le bâti, alors que le conduit interne du bâti communique avec le volume interne de l'élément femelle, le bâti délimitant au moins deux orifices débouchant dans le logement interne en regard de la collerette externe dans une direction radiale au deuxième axe central.

Ce sous-ensemble permet d'assurer une fonction efficace de nettoyage d'un élément mâle complémentaire de l'élément femelle.

Selon d'autres aspects avantageux mais non obligatoires de l'invention, un tel sous-ensemble de raccordement peut incorporer une ou plusieurs des caractéristiques suivantes, prises selon toute combinaison techniquement admissible :
- l'un des orifices est relié à une source d'air sous pression ;
- l'obstacle de l'élément femelle coopère avec le bâti dans une direction circonférentielle au premier axe central pour bloquer en rotation le corps par rapport au bâti dans une configuration où chacun des orifices est en regard, dans une direction radiale, d'au moins un des passages.

L'invention concerne, en outre, un raccord qui comprend un élément femelle tel que mentionné ci-dessus et un élément mâle qui, en configuration accouplée du raccord, est introduit dans le volume interne du corps. Une face frontale annulaire de l'élément mâle repousse le tiroir en position reculée d'ouverture, alors que le joint d'étanchéité distal est en contact avec une surface radiale externe de l'élément mâle dans une configuration intermédiaire de désaccouplement dans laquelle le tiroir est en position avancée de fermeture.

Ce raccord présente les mêmes avantages que l'élément femelle de l'invention.

L'invention sera mieux comprise et d'autres avantages de celle-ci apparaîtront plus clairement à la lumière de la description qui va suivre de deux modes de réalisation d'un élément femelle, d'un sous-ensemble de raccordement, d'un raccord conformes à son principe, donnée uniquement à titre d'exemple et faite en référence aux dessins, dans lesquels :
[Fig 1] la figure 1 est une section longitudinale d'un raccord conforme à un premier mode de réalisation de l'invention et comprenant un élément femelle, lui-même conforme au premier mode de réalisation de l'invention, et un élément mâle, dans une configuration désaccouplée ;
[Fig 2] la figure 2 est une section transversale partielle selon le plan brisé II-II à la figure 1, du raccord de la figure 1, avec ajout d'une partie d'un bâti associé à l'élément femelle ;
[Fig 3] la figure 3 est une section d'un sous-ensemble conforme à l'invention et comprenant le raccord de la figure 1 en configuration accouplée, selon un plan de coupe longitudinal du raccord, orthogonal au plan de la figure 1 ;
[Fig 4] la figure 4 est une section analogue à la figure 3, le raccord étant représenté dans une configuration intermédiaire de désaccouplement ;
[Fig 5] la figure 5 est une section analogue à la figure 3, d'un sous-ensemble également conforme à l'invention et comprenant un raccord conforme à un deuxième mode de réalisation de l'invention, dans une configuration accouplée ;
[Fig 6] la figure 6 est une section du sous-ensemble de la figure 5, le raccord étant représenté dans une configuration intermédiaire de désaccouplement.

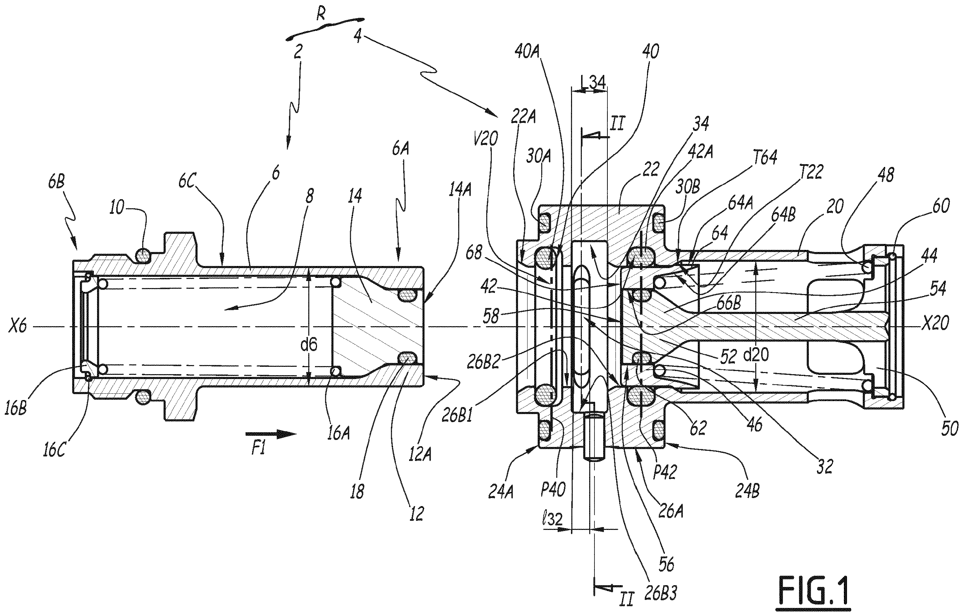

La figure 1 représente un raccord R de type fluidique.

Le raccord R comprend un élément mâle 2 et un élément femelle 4 conforme à un premier mode de réalisation de l'invention. L'élément mâle 2 est complémentaire de l'élément femelle 4.

L'élément mâle 2 comprend un corps 6, qui présente une forme de révolution centrée sur un axe longitudinal X6 et définit un conduit interne 8, une extrémité avant 6A, une extrémité arrière 6B et une surface radiale externe 6C de l'extrémité avant 6A dont on note d6 le diamètre externe. La surface radiale externe 6C est un cylindre de section circulaire centrée sur l'axe longitudinal X6, c'est-à-dire que la surface radiale externe 6C présente un diamètre externe d6 constant.

À cet égard, on définit une direction longitudinale ou axiale comme s'étendant suivant l'axe central longitudinal de l'élément considéré, c'est-à-dire horizontale sur les figures 1 et 3 à 6. On définit une direction radiale à un axe comme étant orthogonale à cet axe, un plan radial à un axe comme étant un plan contenant cet axe et s'étendant dans une direction radiale, un plan orthoradial à un axe est un plan orthogonal à un plan radial à cet axe et ne coupant pas cet axe, et une direction orthoradiale à un axe est une direction orthogonale à un plan radial à cet axe et ne coupant pas cet axe. On définit une direction circonférentielle à un axe comme étant orientée selon une direction correspondant à une rotation autour de cet axe. Pour chaque élément considéré, le terme « interne » signifie « tourné vers l'axe central longitudinal », alors que le terme « externe » signifie « tourné dans la direction opposée à l'axe central longitudinal ».

Pour plus de clarté, on définit aussi le côté avant d'un élément mâle, respectivement d'un élément femelle, comme le côté de cet élément mâle, respectivement de cet élément femelle, orienté dans la direction longitudinale dans le sens de l'emmanchement ou de l'accouplement, c'est-à-dire orienté vers l'élément femelle, respectivement vers l'élément mâle, au tout début de l'emmanchement. Le côté avant de l'élément femelle 4 est orienté vers la gauche de la figure 1 tandis que le côté avant de l'élément mâle 2 est orienté vers la droite de la figure 1. À l'inverse, on définit le côté arrière d'un élément mâle, respectivement d'un élément femelle, comme la direction longitudinale opposée à l'élément femelle, respectivement à l'élément mâle.

Ainsi, dans l'exemple des figures 1 et 3 à 6, l'avant de l'élément mâle 2 est situé sur la droite de cet élément mâle, alors que l'avant de l'élément femelle 4 est situé sur la gauche de cet élément femelle.

L'extrémité arrière 6B de l'élément mâle 2 est filetée et est destinée à être vissée sur une plaque, avec interposition d'un joint d'étanchéité 10.

L'extrémité avant 6A délimite un siège 12 et présente une face frontale annulaire 12A. L'élément mâle 2 comprend, en outre, une soupape 14 et un ressort de rappel 16A. La soupape 14 présente une face avant 14A. Le ressort de rappel 16A et la soupape 14 sont logés dans le conduit interne 8, le ressort de rappel 16A étant, du côté avant, en appui sur la soupape 14 tandis que, du côté arrière, le ressort de rappel 16A est en appui sur une bague 16B, elle-même immobilisée dans le corps 6 par un segment d'arrêt 16C. Le ressort de rappel 16A, maintenu en compression dans le conduit interne 8, rappelle la soupape 14 en butée avant contre le siège 12 du corps 6. Un joint d'étanchéité 18 est logé dans la soupape 14 et assure l'étanchéité entre la soupape 14 et le siège 12 en configuration d'appui de la soupape 14 contre le siège 12, ce qui correspond, pour la soupape 14 de l'élément mâle 2, à une position dite de fermeture.

En position de fermeture, la face avant 14A de la soupape 14 est avantageusement affleurante avec la face frontale annulaire 12A du siège 12.

L'élément femelle 4 comprend un corps 20 de révolution centré sur un premier axe central X20 longitudinal.

Le corps 20 définit un volume interne V20 et comprend une collerette externe 22, monobloc avec le reste du corps 20. La collerette externe 22 présente une face axiale avant 24A, une face axiale arrière 24B, une surface radiale externe 26A et une surface radiale interne 26B étagée composée de trois portions de surface radiale interne annulaires, à savoir une portion de surface radiale interne avant 26B1 et une portion de surface radiale interne arrière 26B2 délimitant le volume interne V20 et une portion de surface radiale interne intermédiaire 26B3 disposée, le long du premier axe central X20, entre les portions de surface radiale interne 26B1 et 26B2. Les faces 24A et 24B font saillie radialement du reste du corps 20. Autrement dit, le reste du corps 20 disposé longitudinalement de part et d'autre de la collerette externe 22 a un diamètre externe inférieur au diamètre de la surface radiale externe 26A de la collerette externe 22. La portion de surface radiale interne intermédiaire 26B3 présente un diamètre d34. Le diamètre d34 est plus important que le diamètre d22 des portions de surface radiale interne avant et arrière 26B1 et 26B2, qui est commun. Le diamètre d22 est inférieur au diamètre interne d20 du corps 20 à l'arrière de la portion de surface radiale interne arrière 26B2 et est égal au diamètre d6, aux jeux radiaux près. On définit une zone de transition T22 comme étant une partie tronconique centrée sur le premier axe central X20 à l'arrière de la surface radiale interne 26B.

La face axiale avant 24A et la face axiale arrière 24B sont des surfaces annulaires, parallèles entre elles et perpendiculaires au premier axe central X20.

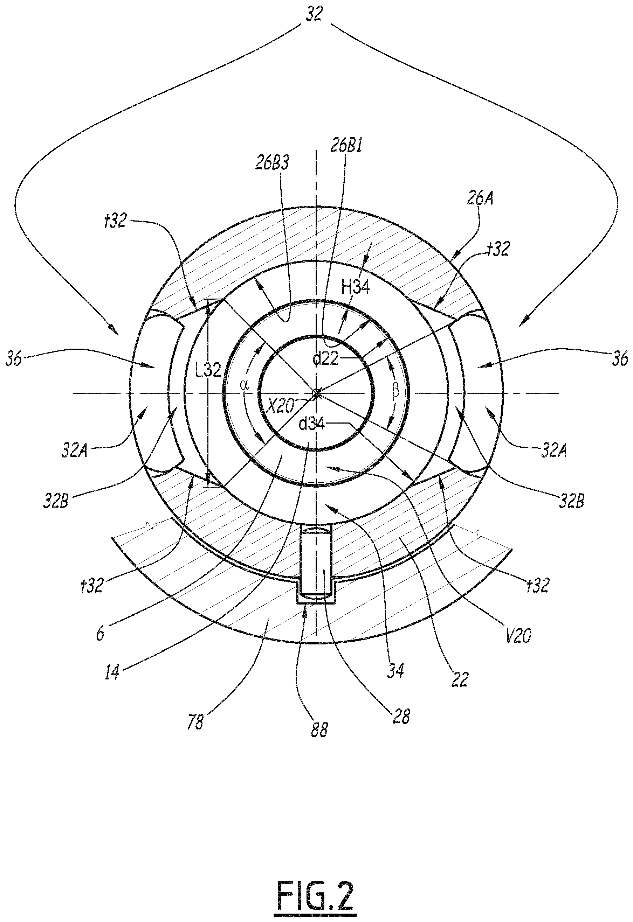

La collerette externe 22 porte un obstacle 28 qui est monté serré dans un alésage radial ménagé dans la collerette externe 22 et qui s'étend radialement de façon centrifuge par rapport au premier axe central X20 au-delà de la surface radiale externe 26A de la collerette externe 22. L'obstacle 28, visible sur les figures 1 et 2, est ici une goupille, qui est bloquée par rapport au corps 20, en particulier l'obstacle 28 est bloqué en rotation par rapport au corps 20 autour du premier axe central X20.

Un joint d'étanchéité avant 30A, par exemple un joint torique en élastomère, est logé dans une gorge annulaire centrée sur le premier axe central X20 et ménagé dans la face axiale avant 24A, tandis qu'un joint d'étanchéité arrière 30B, par exemple un joint torique en élastomère, est logé dans une gorge annulaire centrée sur le premier axe central X20 et ménagé dans la face axiale arrière 24B.

Le volume interne V20 débouche sur l'extérieur par une embouchure 22A, qui présente un profil évasé vers l'avant.

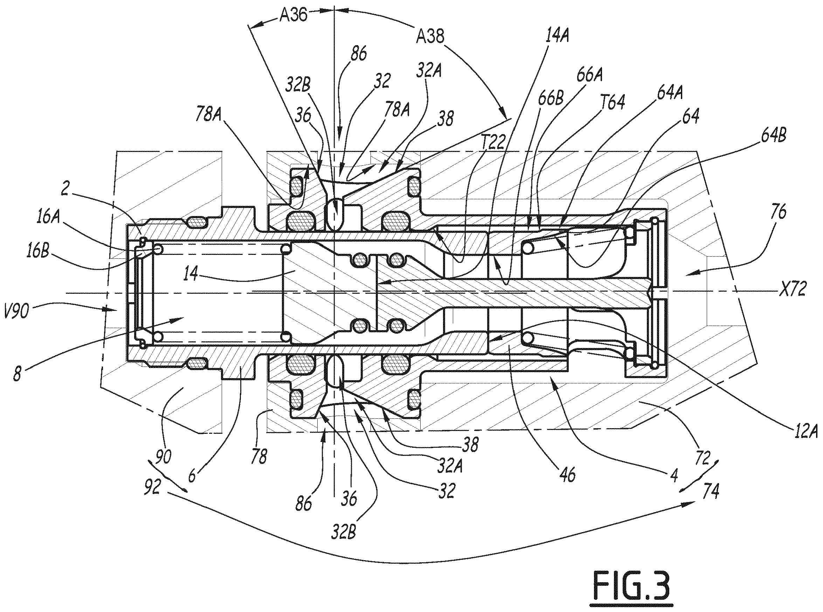

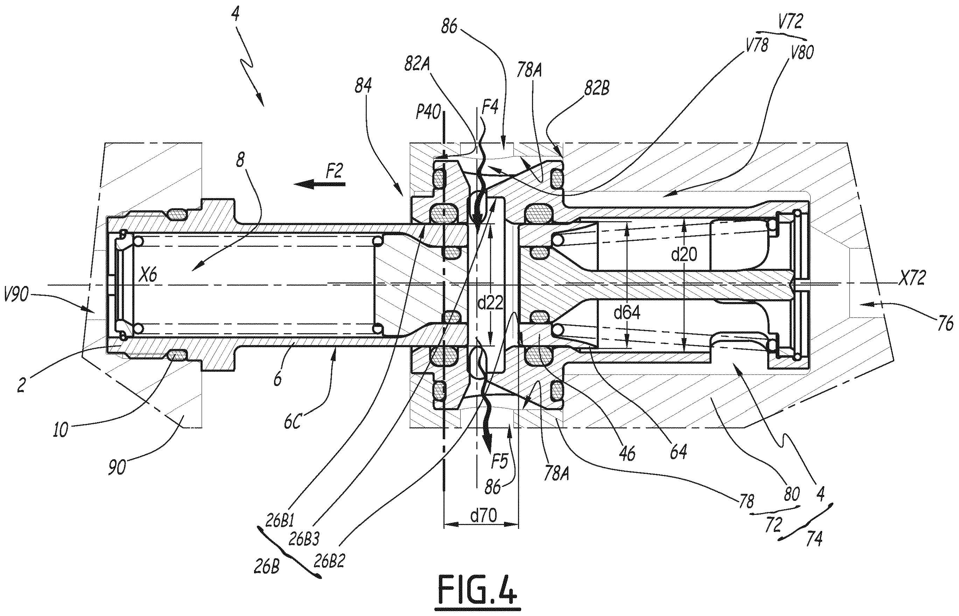

La collerette externe 22 présente, en outre, deux passages 32 ménagé à travers la collerette externe 22. Un seul de ces passages 32 est visible sur la figure 1, tandis que les deux passages 32 sont visibles sur la figure 2, suivant un plan de coupe transversal au premier axe central X20, et sur les figures 3 et 4, suivant un plan de coupe médian, c'est-à-dire longitudinal et orthogonal au plan de coupe de la figure 1.

Les deux passages 32 traversent radialement la collerette externe 22 et relient la surface radiale externe 26A au volume interne V20. Chacun des passages 32 définit un volume externe 32A et un volume de section réduite 32B, qui sont visibles sur les figures 2 à 4. Le volume externe 32A débouche sur la surface radiale externe 26A de la collerette externe 22. Le volume de section réduite 32B est dit « de section réduite » car il délimite une section de passage maximale inférieure à la section de passage maximale du volume externe 32A dans un plan orthoradial, c'est-à-dire dans un plan perpendiculaire à une direction radiale au premier axe central X20, et car la section de passage du volume externe 32A dans un plan orthoradial décroît en direction du volume de section réduite 32B. Le volume de section réduite 32B est radialement plus proche du premier axe central X20 que le volume externe 32A et débouche au sein de la collerette externe 22 dans un volume annulaire 34 délimité par la portion de surface radiale interne intermédiaire 26B3. Le volume annulaire 34 est un cylindre de section circulaire centré sur le premier axe central X20, dont on note L34 la longueur mesurée parallèlement au premier axe central X20 et H34 la hauteur mesurée radialement à cet axe. La hauteur H34 est égale à la différence du diamètre d22 des portions 26B1-26B2, d'une part, et du diamètre d34 de la portion 26B3, d'autre part. Le volume annulaire 34 est ménagé dans la surface radiale interne 26B et s'étend tout autour du premier axe central X20 et du volume interne V20. Le volume externe 32A et le volume de section réduite 32B associé sont propres à un passage 32 alors que le volume annulaire 34 est commun aux deux passages 32. Autrement dit chaque passage 32 débouche dans le volume interne V20 par l'intermédiaire du même volume annulaire 34. L'intersection entre le volume annulaire V34 et les portions de surface radiale interne 26B1-26B2 constitue le débouché des passages 32 dans le volume interne V20. Les deux passages 32 sont répartis à 180° autour du premier axe central X20 dans la mesure où les deux volumes externes 32A, respectivement les deux volumes de section réduite 32B, sont répartis à 180° autour du premier axe central X20.

On note ℓ32 la largeur, mesurée suivant une direction parallèle au premier axe central X20, du volume de section réduite 32B débouchant dans le volume annulaire 34. En pratique, la largeur ℓ32 est de l'ordre de 2 mm. La longueur L34 du volume annulaire 34 est supérieure à la largeur ℓ32 de chaque volume de section réduite 32B. En pratique, la longueur L34 est supérieure à la largeur ℓ32 d'une longueur comprise entre 1 mm et 2,5 mm.

En coupe dans le plan orthogonal au premier axe central X20 représenté en figure 2, les parois de chaque volume de section réduite 32B définissent deux traces t32. Les deux traces t32 de chaque passage 32 divergent en direction du premier axe central X20.

On définit un premier secteur angulaire α comme étant l'angle, autour du premier axe central X20, entre les intersections des traces t32 d'un volume de section réduite 32B et la surface radiale externe du volume annulaire 34, c'est-à-dire la portion de surface radiale interne intermédiaire 26B3.

Le premier secteur angulaire α est suffisamment large pour balayer toute la face frontale 12A du corps 6 de l'élément mâle 2 et toute la face avant 14A de la soupape 14, ainsi qu'expliqué plus loin dans la présente description.

En pratique, le premier secteur angulaire α est compris entre 45° et 100°. De préférence, le premier secteur angulaire α est compris entre 55° et 90°.

On définit une dimension orthoradiale L32 du volume de section réduite 32B comme étant la longueur maximale, prise dans une direction orthoradiale, entre les traces t32 d'un volume de section réduite 32B. La dimension orthoradiale L32 est supérieure ou égale à 90% du diamètre d22 ou du diamètre d6, de préférence au moins égale au diamètre d22 ou du diamètre d6, le diamètre d22 étant dans l'exemple égal à 15 mm.

Pour un volume de section réduite 32B donné, la largeur ℓ32 est au moins deux fois inférieure à la dimension orthoradiale L32, de préférence au moins cinq fois inférieure à la dimension orthoradiale L32. Le flux d'air sous pression provenant de l'orifice 86 d'entrée est ainsi concentré le long d'un plan orthogonal au premier axe central X20.

On définit aussi un secteur angulaire β comme étant l'angle, autour du premier axe central X20, entre l'intersection des traces t32 d'un volume de section réduite 32B et du volume externe 32A contigu. En pratique, le deuxième secteur angulaire β est compris entre 45° et 65°, de préférence de l'ordre de 55°.

Compte-tenu du caractère divergent des traces t32 en direction du premier axe central X20, le premier secteur angulaire α a une valeur supérieure à celle du deuxième secteur angulaire β.

Chaque volume externe 32A présente une surface distale ou avant 36 et une surface proximale ou arrière 38, visibles sur les figures 3 et 4. La surface distale 36 et la surface proximale 38 d'un volume externe 32A sont inclinées par rapport à un plan orthogonal au premier axe central X20 et convergent vers le premier axe central X20.

On définit un angle A36 comme étant l'angle entre la trace de la surface distale 36 dans le plan médian du volume de section réduite 32B radial au premier axe central X20 et un axe radial au premier axe central X20 et contenu dans le plan médian, on définit aussi un angle A38 comme étant l'angle entre la trace de la surface proximale 38 dans le plan médian du volume de section réduite 32B et un axe radial au premier axe central X20 et contenu dans le plan médian.

La surface proximale 38 est plus inclinée que la surface distale 36, c'est-à-dire que l'angle A38 est supérieur à l'angle A36.

En pratique, l'angle A38 est de l'ordre de 65°, tandis que l'angle A36 est de l'ordre de 25°. Avantageusement, la somme de l'angle A38 et de l'angle A36 est égale à 90°, un volume externe 32A présentant une face proximale 38 orthogonale à sa face distale 36 étant plus facile à usiner qu'un volume externe avec un autre angle, notamment par fraisage.

Ainsi que visible sur la figure 2, l'alésage radial portant la goupille 28 s'étend perpendiculairement à un plan de symétrie des passages 32 qui est radial au premier axe central X20.

Une gorge distale 40, dans laquelle est logé un joint d'étanchéité distal 40A, par exemple un joint torique en élastomère, est ménagée radialement dans la surface radiale interne 26B, plus précisément dans la portion de surface radiale interne avant 26B1. La gorge distale 40 est située longitudinalement au premier axe central X20 entre le volume annulaire 34 et l'embouchure 22A.

Une gorge proximale 42, dans laquelle est logé un joint d'étanchéité proximal 42A, par exemple un joint torique en élastomère, est ménagée radialement dans la surface radiale interne 26B, plus précisément dans la portion de surface radiale interne arrière 26B2. La gorge proximale 42 et la gorge distale 40 sont situées de part et d'autre du volume annulaire 34 selon le premier axe central X20. Le joint d'étanchéité distal 40A et le joint d'étanchéité proximal 42A sont ainsi situés de part et d'autre du volume annulaire 34 selon le premier axe central X20. Le joint d'étanchéité distal 40A est situé à l'avant de chacun des passages 32 dans le sens où le joint d'étanchéité distal 40A est disposé dans une partie avant du corps 20 qui est délimitée longitudinalement par les passages 32. Ainsi le joint d'étanchéité distal 40A est situé à l'avant du débouché de chacun des passages 32 dans le volume interne V20. Le joint d'étanchéité proximal 42A est situé à l'arrière de chacun des passages 32 dans le sens où le joint d'étanchéité proximal 42A est disposé dans une partie arrière du corps 20 qui est délimitée longitudinalement par les passages 32. Ainsi le joint d'étanchéité proximal 42A est situé à l'arrière du débouché de chacun des passages 32 dans le volume interne V20.

Chacune des gorge distale 40 et gorge proximale 42 présente un fond et deux parois latérales. On définit un plan médian P40 de la gorge distale 40 comme étant un plan orthogonal au premier axe central X20, passant par le milieu du fond de la gorge distale 40 et un plan médian P42 de la gorge proximale 42 comme étant un plan orthogonal au premier axe central X20, passant par le milieu du fond de la gorge proximale 42. La gorge distale 40 et la gorge proximale 42 sont disposées dans le corps 20 de telle sorte que leurs plans médians respectifs P40 et P42 sont situés, le long du premier axe central X20, entre les surfaces 24A et 24B.

L'élément femelle 4 comporte, en outre, un poussoir central 44, un tiroir 46 et un deuxième ressort 48.

Le poussoir central 44 comprend une embase 50, une tête 52 et une tige 54 de forme allongée, la tige 54 étant alignée dans sa longueur sur le premier axe central X20 et étant reliée à une extrémité arrière à l'embase 50 et une extrémité avant à la tête 52.

Le poussoir central 44 est maintenu dans le volume interne V20 par un segment d'arrêt 60 bloquant l'embase 50 le long du premier axe central X20. La tête 52 présente une forme de révolution autour du premier axe central X20 et définit une surface périphérique externe 56 et une face avant 58. Un joint 62, par exemple un joint torique en élastomère, est logé dans une gorge ménagée radialement dans la surface périphérique externe 56.

Le tiroir 46 est mobile le long du premier axe central X20 entre une position avancée de fermeture dans laquelle le tiroir 46 coopère de manière étanche avec le corps 20 et le poussoir central 44 et ferme une partie arrière du volume interne V20 et une position reculée d'ouverture de la partie arrière du volume interne V20.

Le tiroir 46 présente une forme de révolution autour du premier axe central X20 et comprend une jupe arrière 64, une face radiale externe 66A, une face radiale interne 66B et une face avant 68.

La jupe arrière 64 présente une surface externe 64A et une surface interne 64B, la surface interne 64B étant divergente vers l'arrière, tandis que la surface externe 64A est cylindrique de section circulaire et présente un diamètre d64. En particulier, le diamètre d64 de la jupe arrière 64 est inférieur ou égal, aux jeux d'assemblage près, au diamètre interne d20 du volume interne V20, mais supérieur au diamètre d22. On définit une face inclinée T64 comme étant la surface inclinée par rapport au premier axe central X20 situé à la jonction entre la surface externe 64A de la jupe arrière et la face radiale externe 66A du tiroir 46.

Sous l'effet du deuxième ressort 48, qui est conjointement en appui sur l'embase 50 du poussoir central 44 et sur le tiroir 46, le tiroir 46 est repoussé vers l'avant et la face inclinée T64 est en butée contre la zone de transition T22 du corps 20.

Lorsque le tiroir 46 est en appui contre le corps 20, la face radiale externe 66A du tiroir 46 coopère de façon étanche avec le joint proximal 42A, autrement dit le joint d'étanchéité proximal 42A est radialement interposé entre le tiroir 46 et le corps 20 et le tiroir 46 coopère de manière étanche avec le corps 20 par l'intermédiaire du joint 42A, tandis que la face radiale interne 66B du tiroir 46 coopère de façon étanche avec le joint 62 du poussoir central 44.

Cette configuration de l'élément femelle 4 correspond à la position de fermeture du tiroir 46, visible sur les figures 1 et 4.

Dans cette position de fermeture, la face avant 68 du tiroir 46 et la face avant 58 du poussoir central 44 sont avantageusement affleurantes et disposées en arrière du débouché des passages 32 dans le volume interne V20. La face avant 68 du tiroir 46 et le joint d'étanchéité distal 40A sont disposés longitudinalement de part et d'autre des passages 32, le joint d'étanchéité distal 40A étant situé à l'avant des passages 32. Ainsi les passages 32 débouchent dans le volume interne V20 entre le joint d'étanchéité proximal 42A et le joint d'étanchéité distal 40A et une communication fluidique est possible entre les deux passages 32 à travers le volume interne V20.

On définit une distance axiale d70, visible sur la figure 4, comme étant la longueur, mesurée parallèlement au premier axe central X20, entre le plan médian P40 et la face avant 68 du tiroir 46 en position de fermeture.

En pratique, la distance axiale d70 est comprise entre 8 mm et 40 mm. Dans l'exemple du premier mode de réalisation représenté sur les figures 1 à 4, la distance axiale d70 est égale à 9 mm.

Sur les figures 3 et 4 l'élément femelle 4 est assemblé à un bâti 72. L'élément femelle 4 et le bâti 72 forment ensemble un sous-ensemble de raccordement 74. Le bâti 72 fait ici partie d'un moule d'injection et délimite un conduit interne 76, qui forme l'extrémité d'un circuit de refroidissement à travers le moule d'injection. Le bâti 72 est ici formé d'une partie avant 78 et d'une partie arrière 80, la partie avant 78 étant solidarisée à la partie arrière 80 par des moyens d'assemblage réversibles, tels que des vis.

La partie arrière 80 définit un logement interne arrière V80, qui est cylindrique de section circulaire centré sur un deuxième axe central X72 longitudinal, tandis que la partie avant 78 définit un autre logement interne avant V78, cylindrique de section circulaire centré sur le deuxième axe central X72, de diamètre interne supérieur au diamètre interne du logement interne arrière V80. Le conduit interne 76 est également centré sur le deuxième axe central X72.

La réunion des logements internes avant V78 et arrière V80 définit le logement interne V72 du bâti 72.

Le logement interne avant V78 est délimité, vers l'avant, par une face axiale annulaire 82A et débouche vers l'extérieur par une ouverture 84. Vers l'arrière, le logement interne avant V78 est délimité par une surface axiale annulaire 82B de la face avant de la partie arrière 80, la surface axiale annulaire 82B étant coaxiale avec et faisant face à la face axiale annulaire 82A. Le logement interne avant V78 est radialement délimité par une surface radiale interne 78A ménagée sur la partie avant 78.

La partie avant 78 présente, en outre, deux orifices 86.

Les deux orifices 86 sont situés à 180° l'un de l'autre par rapport au deuxième axe central X72, s'étendent radialement au deuxième axe central X72 et relient l'extérieur à la surface radiale interne 78A de la partie avant 78. En variante, les orifices 86 peuvent être inclinés par rapport à la direction radiale. Un premier des deux orifices 86, dit orifice « d'entrée », est destiné à être raccordé à une source d'air sous pression, alors que le deuxième des deux orifices 86, dit orifice « de sortie », constitue une évacuation de l'air sous pression introduit par l'orifice 86 d'entrée.

Le trajet de l'air sous pression passant par l'orifice 86 d'entrée, puis passant par le passage 32 situé en regard et pénétrant dans le volume interne V20, est représenté schématiquement par une flèche ondulée F4 sur la figure 4. De façon analogue, l'air sous pression évacué par l'orifice 86 de sortie est représenté schématiquement par une flèche ondulée F5. L'orifice 86 situé sur le haut de la figure 4 est ici arbitrairement choisi comme étant l'orifice d'entrée pour illustrer le cheminement de l'air sous pression. Ainsi on comprend que pendant l'opération de désaccouplement, l'air sous pression provenant de l'orifice 86 d'entrée entraîne les éventuelles égouttures de la surface radiale externe 6C de l'élément mâle 2, ainsi que de la face frontale annulaire 12A et de la face avant 14A de la soupape 14, les égouttures étant évacuées par l'orifice 86 de sortie.

Une rainure 88 est, en outre, ménagée longitudinalement dans la partie avant 78. La rainure 88, visible à la figure 2, est ouverte sur le logement interne avant V78.

Sur les figures 3 et 4, l'élément femelle 4 est assemblé au bâti 72, c'est-à-dire que le corps 20 est logé dans le logement interne V72, le premier axe central X20 étant parallèle au deuxième axe central X72.

En particulier, la collerette externe 22 est logée dans le logement interne avant V78 de la partie avant 78, la face axiale avant 22A étant montée étanche et glissante sur la surface axiale annulaire avant 82A par l'interposition du joint avant 30A. Conjointement, la face axiale arrière 24B est montée étanche et glissante sur la surface axiale annulaire arrière 82B par l'interposition du joint arrière 30B. Lorsque l'élément femelle 4 est assemblé au bâti 72, l'obstacle 28 coopère avec la rainure 88 du bâti 72 dans la direction circonférentielle au premier axe central X20 et bloque la rotation du corps 20 par rapport au bâti 72 autour du premier axe central X20. L'élément femelle 4 est ainsi libre en translation transversalement au deuxième axe central X72 par rapport au bâti 72, tant que la surface radiale externe 26A de la collerette externe 22 n'est pas en contact avec la surface radiale interne 78A de la partie avant 78. Sur l'exemple des figures montrant le sous-ensemble de raccordement 74, la collerette externe 22 est représentée au contact de la surface radiale interne 78A sur le bas de chaque figure.

Quelle que soit la position du corps 20 dans le volume interne avant V78, les joints d'étanchéité 30A et 30B assurent l'étanchéité entre le corps 20 et le bâti 72, et le conduit interne 76 communique avec la partie arrière du volume interne V20, en arrière du joint 62. Grâce à la coopération de l'obstacle 28 avec la rainure 88, l'orientation angulaire de l'élément femelle 4 par rapport au bâti 72 est définie et le volume externe 32A d'un des passages 32 se trouve en permanence en regard, dans une direction radiale au deuxième axe central X72, d'un des orifices 86 ménagés à travers le bâti 72. Autrement dit, l'obstacle 28 de l'élément femelle 4 bloque en rotation le corps 20 par rapport au bâti 72 autour du premier axe central X20 dans une configuration où chacun des orifices 86 est en regard, dans une direction radiale, d'au moins un des passages 32.

Les orifices 86 sont de section cylindrique. Le diamètre des orifices 86 est inférieur à la dimension longitudinale et orthoradiale du débouché externe de chaque passage 32, le débouché externe étant le contour fermé défini par l'intersection entre le volume externe 32A d'un passage 32 et la surface radiale externe 26A de la collerette externe 22.

L'élément mâle 2 est monté étanche sur une plaque 90, par vissage et interposition du joint d'étanchéité 10. Un conduit d'extrémité V90 du circuit de refroidissement est ménagée à travers la plaque 90, le conduit d'extrémité V90 communiquant avec le conduit interne 8 de l'élément mâle 2.

La plaque 90 fait par exemple partie d'une coulisse de moule, qui n'est pas représentée sur les figures. Le sous-ensemble de raccordement 74 et l'élément mâle 2 monté sur la plaque 90 appartiennent ensemble à une installation de raccordement 92.

Entre la configuration désaccouplée représentée sur la figure 1 et la configuration accouplée représentée sur la figure 3, l'élément mâle 2 est rapproché de l'élément femelle 4 suivant un mouvement d'emmanchement, représenté par la flèche F1 sur la figure 1, la flèche F1 étant parallèle à l'axe longitudinal X6 et orientée vers l'avant de l'élément mâle 2.

L'axe longitudinal X6 et le premier axe central X20 sont en général parallèles, mais peuvent présenter des défauts d'alignement de l'ordre de 0,5 mm maximum.

Alors que l'élément mâle 2 est déplacé suivant le mouvement d'emmanchement, l'extrémité avant 6A de l'élément mâle 2 rentre en contact avec l'embouchure 22A de l'élément femelle 4. L'élément femelle 4 s'adapte alors à la position de l'élément mâle 2 par un mouvement de la collerette externe 22 dans le logement interne V72 du bâti 72, radialement au deuxième axe central X72, jusqu'à ce que l'axe longitudinal X6 et le premier axe central X20 soient alignés.

Le mouvement d'emmanchement se poursuivant, le corps 6 de l'élément mâle 2 s'engage dans le volume interne V20, le joint d'étanchéité distal 40A vient au contact de la surface radiale externe 6C de l'élément mâle 2 et la face frontale annulaire 12A vient au contact de la face avant 68 du tiroir 46. La poursuite du mouvement d'emmanchement a pour effet que le tiroir 46 est repoussé en position d'ouverture à l'encontre de l'effort élastique du deuxième ressort 48. En même temps, la face avant 58 du poussoir central 44 vient au contact de la face avant 14A de la soupape 14 et la soupape 14 est repoussée en position d'ouverture à l'encontre de l'effort élastique du ressort de rappel 16A.

Le joint d'étanchéité proximal 42A vient ensuite en contact de la surface radiale externe 6C de l'élément mâle 2. Le joint d'étanchéité proximal 42A participe à isoler fluidiquement les passages 32 du conduit interne 8 et du conduit interne 76. La surface radiale externe 6C de l'élément mâle 2 est alors conjointement en contact étanche avec le joint d'étanchéité distal 40A et le joint d'étanchéité proximal 42A.

Avantageusement, le joint d'étanchéité distal 40A et le joint d'étanchéité proximal 42A sont identiques l'un à l'autre. La surface radiale externe 6C présentant un diamètre externe d6 constant, les diamètres internes des parties de la surface radiale interne 26B dans lesquelles débouchent la gorge distale 40, dans laquelle est logé le joint d'étanchéité distal 40A, et la gorge proximale 42, dans laquelle est logé le joint d'étanchéité proximal 42A, sont égaux.

La configuration accouplée de l'élément femelle 4 et de l'élément mâle 2 est atteinte et correspond à la configuration représentée en figure 3.

La connexion est dite rapide puisqu'elle ne nécessite pas d'outillage additionnel, mais seulement le rapprochement de l'élément femelle 4 et de l'élément mâle 2 suivant le mouvement d'emmanchement. En ce sens le raccord R est aussi dit « raccord rapide ».

Pendant que le raccord R est en configuration accouplée, le fluide de refroidissement circule entre le conduit interne 76 du bâti 72, le volume interne 20 du corps 20 de l'élément femelle 4, le conduit interne 8 de l'élément mâle 2 et l'extrémité V90 du conduit de refroidissement de la plaque 90.

La soupape 14, le poussoir central 44, le tiroir 46 et l'extrémité avant 6A de l'élément mâle 2 baignent alors dans le fluide de refroidissement.

Entre la configuration accouplée de la figure 3 et la configuration intermédiaire de désaccouplement présentée sur la figure 4, la plaque 90 est éloignée du bâti 72 suivant un mouvement de direction opposée au mouvement d'emmanchement, représenté par une flèche F2 sur la figure 4, ce qui correspond à un mouvement de désaccouplement.

L'orifice 86 d'entrée est alors alimenté avec l'air sous pression qui, tant que le tiroir 46 est en position reculée d'ouverture, traverse les passages 32 et s'échappe par l'orifice 86 de sortie via le volume annulaire 34, en contournant le corps 6 de l'élément mâle 2. L'air sous pression balaye ainsi de la surface radiale externe 6C de l'élément mâle 2 et les éventuelles égouttures de fluide de refroidissement qui n'auraient pas été arrêtées par le joint proximal 42A. Les joints 30A et 30B forment une barrière étanche à l'air sous pression, qui ne peut s'introduire dans le volume interne arrière V80 ou s'échapper vers l'extérieur du bâti 72 entre le bâti 72 et le corps 20.

Suivant une séquence inverse à celle de l'accouplement, le tiroir 46 est repoussé par le deuxième ressort 48 en position de fermeture, la soupape 14 est repoussée par le ressort de rappel 16A en position de fermeture, tandis que l'élément mâle 2 coopère toujours avec le joint distal 40A.

Dans cette configuration, et alors que l'élément mâle 2 continue de se retirer de l'élément femelle 4 mais reste reçu dans le volume interne V20, l'air sous pression provenant de l'orifice 86 d'entrée traverse les passages 32 et vient balayer la face avant 58 du poussoir central 44, la face avant 14A de la soupape 14, la face frontale annulaire 12A de l'élément mâle 2 et la face avant 68 du tiroir 46. L'air sous pression balaye aussi la surface radiale externe 6C de l'élément mâle 2. Ainsi toute égoutture existant sur ces surfaces est entraînée par l'air sous pression dans l'orifice 86 de sortie et évacuée hors du volume interne V20, de manière à ce qu'aucune égoutture ne puisse polluer les surfaces d'injection du moule lorsque l'élément mâle 2 est complètement retiré du sous-ensemble de raccordement 74. Le mouvement de désaccouplement s'achève avec la perte d'étanchéité au niveau du joint distal 40A. Le joint d'étanchéité distal 40A assure, lorsqu'il coopère avec la surface radiale externe 6C, une barrière contre l'écoulement de l'air sous pression en provenance de l'orifice 86 d'entrée vers l'extérieur à travers l'embouchure 22A et, au cours du mouvement de retrait de l'élément mâle 2, une fonction de raclage de la surface radiale externe 6C. L'alimentation en air sous pression est alors suspendue.

L'élément femelle 4 et l'élément mâle 2 sont alors prêts pour une nouvelle connexion.

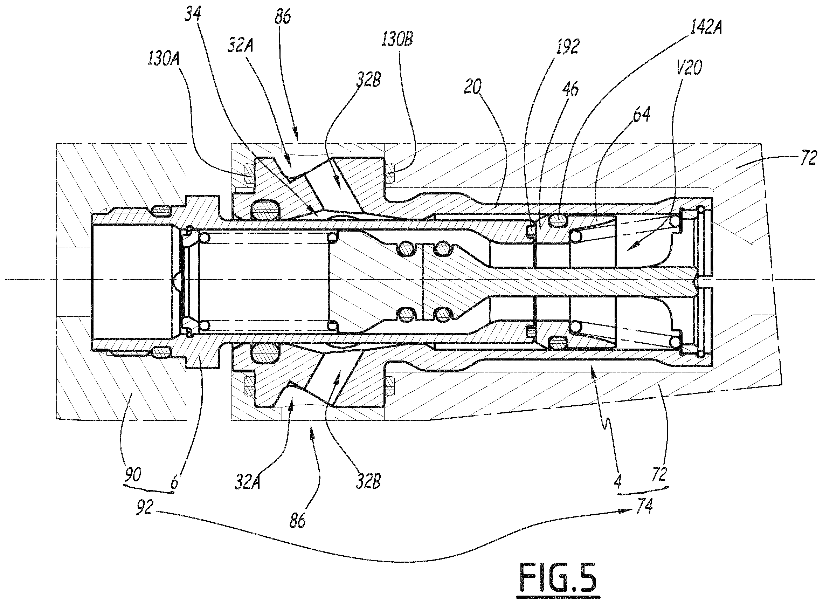

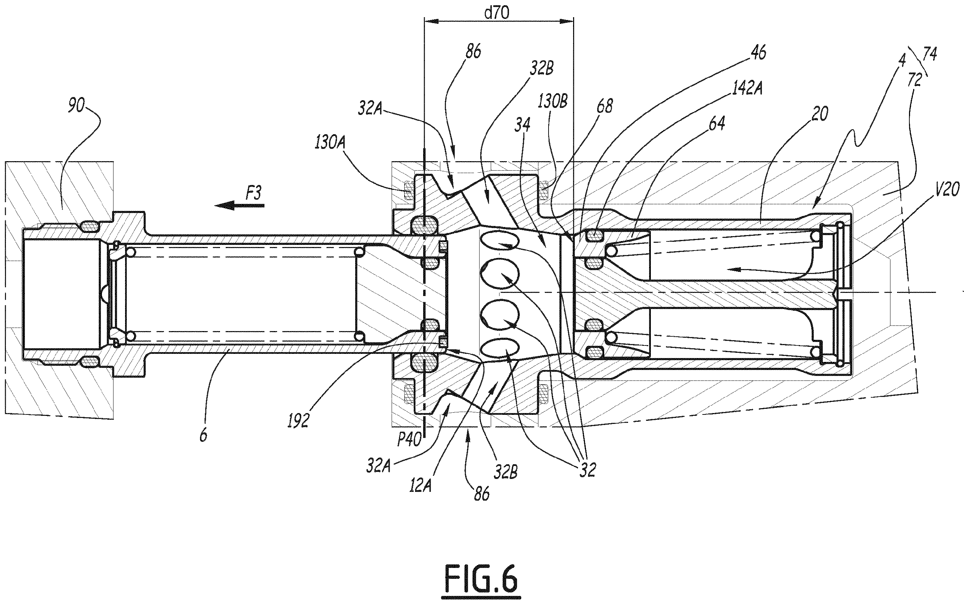

Dans le deuxième mode de réalisation de l'élément femelle 4 représenté sur les figures 5 et 6, les éléments analogues à ceux du premier mode de réalisation portent les mêmes références et fonctionnent de la même façon. Dans ce qui suit, on décrit principalement les différences entre le premier mode et le deuxième mode de réalisation.

Les passages 32 sont, dans ce deuxième mode de réalisation, au nombre de dix. Le nombre de passages 32 peut être ajusté en fonction des besoins et de la taille des éléments 2 et 4 du raccord R. Les passages 32 sont répartis, de préférence régulièrement, radialement autour du premier axe central X20 dans la collerette externe 22, un des passages 32 étant situé radialement en regard d'un premier orifice 86 d'entrée, tandis qu'un autre des passages 32 est situé radialement en regard d'un deuxième orifice 86 de sortie.

Dans ce deuxième mode de réalisation, les volumes externes 32A des différents passages 32 se rejoignent et définissent un volume commun périphérique, qui facilite le passage de l'air sous pression autour de la collerette externe 22 quelle que soit la position de la collerette externe 22 dans le bâti 72.

Les volumes de section réduite 32B des passages 32 présentent chacun une forme cylindrique de section circulaire dont l'axe est radialement incliné par rapport au premier axe central X20 et converge avec le premier axe central X20 vers l'arrière de l'élément femelle 4. Cette inclinaison des axes des volumes de section réduite 32B débouchant dans le volume annulaire 34 est dite « en sifflet » et a pour effet d'orienter les jets d'air passant par les passages 32 vers l'avant de l'élément mâle 2 au cours du désaccouplement, augmentant ainsi l'efficacité du soufflage des égouttures.

Le volume annulaire 34 par lequel les passages 32 débouchent dans le volume interne V20 présente une forme longitudinalement plus allongée que dans le premier mode de réalisation. En particulier, la distance axiale d70 entre la gorge distale 40 et la face avant 68 du tiroir 46 en position de fermeture est égale ici à 20 mm.

Plus généralement, la distance axiale d70 est ajustée pour tenir compte de la vitesse du mouvement de désaccouplement de l'élément mâle 2, le mouvement de désaccouplement étant représenté par la flèche F3 sur la figure 6. Ainsi, lorsque la vitesse de désaccouplement de l'élément mâle 2 est élevée, une distance axiale d70 plus longue fait que le temps de séjour de l'élément mâle 2, en particulier de la face frontale annulaire 12A du corps 6 et de la face avant 14A de la soupape 14, en regard du volume annulaire 34 dans la direction radiale est plus long. Le temps de soufflage des égouttures est ainsi plus long et le nettoyage est plus efficace.

Dans ce deuxième mode de réalisation, le diamètre d64 de la jupe arrière 64 est égal, aux jeux d'assemblage près, au diamètre interne d20 du volume interne V20 et l'étanchéité entre le corps 20 et le tiroir 46 en position de fermeture est assurée par un joint d'étanchéité 142A, par exemple un joint torique en élastomère, qui est logé dans une gorge ménagée radialement dans la surface radiale externe du tiroir 46 et qui coopère de manière étanche avec le corps 20 en arrière des passages 32 en position de fermeture du tiroir 46.

En position de fermeture du tiroir 46, le joint d'étanchéité distal 40A et la face avant 68 du tiroir 46 sont disposés longitudinalement de part et d'autre des passages 32. Autrement dit le joint d'étanchéité distal 40A est disposé d'un côté longitudinal du débouché de chaque passage 32 dans le volume interne V20 alors que la face avant 68 du tiroir 46 est disposée de l'autre côté longitudinal du débouché de chaque passage 32 dans le volume interne V20. Ainsi les passages 32 débouchent dans le volume interne V20 entre le joint 142A et le joint d'étanchéité distal 40A et une communication fluidique est possible entre deux passages 32 à travers le volume interne V20.

En configuration accouplée du raccord R visible sur la figure 5, l'étanchéité entre le corps 6 de l'élément mâle 2 et le tiroir 46 en position d'ouverture est assurée par un joint d'étanchéité frontal 192, par exemple en élastomère, logé dans une gorge ménagée dans la face frontale annulaire 12A du corps 6.

L'étanchéité entre la face axiale avant 24A de la collerette externe 22 et la face axiale annulaire avant 82A du bâti 72 est réalisée par un joint d'étanchéité avant 130A, par exemple un joint torique en élastomère, logé dans une gorge ménagée dans la face axiale annulaire avant 82A du bâti, au lieu du joint avant 30A logé dans la collerette externe 22 dans le premier mode de réalisation.

De façon analogue, l'étanchéité entre la face axiale arrière 24B de la collerette externe 22 et la surface axiale annulaire arrière 82B du bâti 72 est, dans le deuxième mode de réalisation, réalisée par un joint d'étanchéité arrière 130B, par exemple un joint torique en élastomère, logé dans une gorge ménagée dans la surface axiale annulaire arrière 82B du bâti 72, au lieu du joint arrière 30B logé dans la collerette externe 22 dans le premier mode de réalisation.

Quel que soit le mode de réalisation, pour une forme de la collerette externe 22 donnée, le joint distal 40A est situé le plus proche possible de l'embouchure 22A, pour que la distance axiale d70 soit la plus longue possible. En pratique, le joint distal 40A, de même que la gorge distale 40 dans laquelle le joint distal 40A est logé, sont alignés avec la face axiale avant 24A de la collerette externe 22, en ce sens que le plan dans lequel s'étend la face avant 24A coupe la gorge 40. L'efficacité du soufflage des égouttures est ainsi maximisée pour un encombrement donné de la collerette externe 22.

En variante non représentée, et pour tous les modes de réalisation, plus de deux orifices 86 peuvent être ménagés à travers le bâti 72, par exemple trois orifices 86, comprenant un orifice 86 d'entrée et deux orifices 86 de sortie. Dans le premier mode de réalisation, on peut alors prévoir trois passages 32 ou plus, pour assurer la circulation de l'air au sein du sous-ensemble de raccordement 74. Dans tous les cas, le nombre de passage 32 est choisi par le concepteur de l'élément femelle 4, supérieur ou égal à deux.

En variante non représentée, le volume annulaire 34 des passages 32 est omis. L'alimentation en air sous pression de l'orifice 86 d'entrée n'est alors effective que lorsque le tiroir 46 est en position avancée de fermeture.

En variante non représentée, pour le blocage en rotation du corps 20 par rapport au bâti 72 dans une configuration où chacun des orifices 86 est en regard radialement d'au moins un des passages 32, un obstacle du corps 20 sous la forme d'une rainure longitudinale ménagée en creux à partir de la surface radiale externe 26 A de la collerette 22 coopère, dans une direction circonférentielle autour du premier axe central X20, avec un pion de blocage fixe en rotation par rapport au bâti 72 autour du deuxième axe central X72. Le pion de blocage s'étend radialement en direction du deuxième axe central X72 depuis la surface radiale interne 78A.

Les modes de réalisation et les variantes mentionnés ci-dessus peuvent être combinés entre eux pour générer de nouveaux modes de réalisation de l'invention.

## Revendications

1. Élément femelle (4) de raccord (R) apte à être accouplé avec un élément mâle (2) pour la jonction fluidique amovible de deux conduits, l'élément femelle comprenant un corps (20) centré sur un premier axe central (X20) longitudinal et définissant un volume interne (V20) de réception de l'élément mâle (2), un côté avant et un côté arrière, l'élément femelle comprenant, en outre, un poussoir central (44) solidaire longitudinalement du corps et disposé au sein du volume interne, ainsi qu'un tiroir (46) mobile au sein du volume interne autour du poussoir central, entre une position avancée de fermeture, dans laquelle le tiroir (46) coopère de manière étanche avec le corps (20) et le poussoir central (44), et une position reculée d'ouverture,
**caractérisé en ce que**
- le corps forme une collerette externe (22) disposée autour du volume interne (V20) et présentant une surface radiale externe (26A), une face axiale avant (24A) et une face axiale arrière (24B), la face axiale avant et la face axiale arrière étant parallèles et annulaires et faisant saillie radialement du reste du corps (20),
- la collerette externe comprend au moins deux passages (32), chaque passage étant ménagé à travers la collerette externe et reliant la surface radiale externe (26A) et le volume interne (V20),
- un joint d'étanchéité distal (40A) est logé dans le corps au niveau d'une surface radiale interne (26B) du corps (20) délimitant le volume interne (V20) et
- une face avant (68) du tiroir (46) en position de fermeture et le joint d'étanchéité distal (40A) sont disposés longitudinalement de part et d'autre des passages (32), le joint d'étanchéité distal étant situé à l'avant des passages (32).

2. Elément femelle (4) selon la revendication précédente, **caractérisé en ce que** l'élément femelle comprend, en outre, un joint d'étanchéité avant (30A) logé sur la face axiale avant (24A) et un joint d'étanchéité arrière (30B) logé sur la face axiale arrière (24B), le joint d'étanchéité avant et le joint d'étanchéité arrière étant centrés sur le premier axe central (X20).

3. Élément femelle (4) selon l'une quelconque des revendications précédentes, **caractérisé en ce qu'**un plan médian (P40) d'une gorge distale (40) logeant le joint d'étanchéité distal (40A) est disposé longitudinalement entre la face axiale avant (24A) et la face axiale arrière (24B) de la collerette (22).

4. Élément femelle (4) selon l'une quelconque des revendications précédentes, **caractérisé en ce que** chaque passage (32) comprend un volume externe (32A) qui débouche sur la surface radiale externe (26A) de la collerette (22), ainsi qu'un volume de section réduite (32B) par rapport au volume externe (32A), le volume de section réduite (32B) étant interne par rapport au volume externe (32A).

5. Élément femelle (4) selon la revendication 4, **caractérisé en ce que**, en section dans un plan orthogonal au premier axe central (X20), des parois (t32) délimitant le volume de section réduite (32B) sont évasées et divergent en direction du volume interne (V20).

6. Élément femelle (4) selon l'une quelconque des revendications 4 ou 5, **caractérisé en ce que** la collerette (22) comprend deux passages (32) qui sont répartis à 180° autour du premier axe central (X20) et **en ce que** chaque volume de section réduite (32B) couvre un secteur angulaire (a) de 45° à 100° autour du premier axe central.

7. Élément femelle (4) selon l'une des revendications 4, 5 ou 6, **caractérisé en ce qu'**une largeur (ℓ32) du volume de section réduite (32B) prise selon le premier axe central (X20) est au moins deux fois inférieure à une dimension orthoradiale (L32) du volume de section réduite (32B).

8. Élément femelle (4) selon l'une quelconque des revendications précédentes, **caractérisé en ce qu'**un joint d'étanchéité proximal (42A) est logé dans le corps (20) dans une gorge proximale (42) débouchant sur une portion de surface radiale interne (26B2) de même diamètre qu'une portion de surface radiale interne (26B1) sur laquelle débouche une gorge distale (40) dans laquelle est logé le joint d'étanchéité distal (40A) et **en ce que**, en position de fermeture du tiroir (46), le joint d'étanchéité proximal (42A) est radialement interposé entre le tiroir et le corps (20).

9. Élément femelle (4) selon l'une quelconque des revendications précédentes, **caractérisé en ce que** le corps (20) délimite un volume annulaire (34) par lequel chaque passage (32) débouche dans le volume interne (V20), un diamètre (d34) du volume annulaire (34) étant supérieur au diamètre (d22) d'une portion de surface radiale interne (26B1) sur laquelle débouche une gorge distale (40) dans laquelle est logé le joint d'étanchéité distal (40A).

10. Élément femelle (4) selon l'une quelconque des revendications précédentes, **caractérisé en ce que** l'élément femelle comprend un obstacle (28), bloqué en rotation par rapport au corps (20) autour du premier axe central (X20) et s'étendant radialement à partir de la surface radiale externe (26A) de la collerette (22).

11. Élément femelle (4) selon l'une quelconque des revendications précédentes, **caractérisé en ce que** le poussoir central (44) présente une face avant (58) plane et **en ce que** la face avant (68) du tiroir (46) et la face avant (58) du poussoir (44) sont affleurantes lorsque le tiroir est en position avancée de fermeture.

12. Sous-ensemble de raccordement (74) comprenant un bâti (72) **caractérisé en ce qu'**il comprend également un élément femelle (4) selon l'une quelconque des revendications précédentes, **en ce que** le bâti délimite un conduit interne (76) et un logement interne (V72), le logement interne (V72) définissant un deuxième axe central (X72) longitudinal parallèle au premier axe central (X20), l'élément femelle (4) étant monté dans le logement interne (V72) du bâti (72) avec possibilité de mouvement du corps (20) dans le bâti (72) radialement au deuxième axe central (X72), avec la face axiale avant (24A) de la collerette externe (22) en contact glissant étanche avec le bâti et la face axiale arrière (24B) de la collerette externe (22) en contact glissant étanche avec le bâti, alors que le conduit interne (76) du bâti communique avec le volume interne (V20) de l'élément femelle, le bâti (72) délimitant au moins deux orifices (86) débouchant dans le logement interne (V72) en regard de la collerette externe (22) dans une direction radiale au deuxième axe central (X72).

13. Sous-ensemble de raccordement (74) selon la revendication précédente, **caractérisé en ce que** l'un des orifices (86) est relié à une source d'air sous pression.

14. Sous-ensemble de raccordement (74) selon l'une quelconque des revendications 12 ou 13, **caractérisé en ce que** l'élément femelle (4) est selon la revendication 10 et **en ce que** l'obstacle (28) de l'élément femelle (4) coopère avec le bâti (72) dans une direction circonférentielle au premier axe central (X20) pour bloquer en rotation le corps (20) par rapport au bâti dans une configuration où chacun des orifices (86) est en regard, dans une direction radiale, d'au moins un des passages (32).

15. Raccord (R) **caractérisé en ce qu'**il comprend un élément femelle (4) selon l'une quelconque des revendications 1 à 11 et un élément mâle (2) qui, en configuration accouplée du raccord, est introduit dans le volume interne (V20) du corps (20), une face frontale annulaire (12A) de l'élément mâle (2) repoussant le tiroir (46) en position reculée d'ouverture, et **en ce que** le joint d'étanchéité distal (40A) est en contact avec une surface radiale externe (6C) de l'élément mâle dans une configuration intermédiaire de désaccouplement dans laquelle le tiroir est en position avancée de fermeture.

## Patentansprüche

1. Buchsenelement (4) eines Anschlusses (R), das angepasst ist, mit einem Steckerelement (2) für die lösbare fluidische Verbindung von zwei Leitungen gekoppelt zu werden, wobei das Buchsenelement einen Körper (20) umfasst, der auf einer ersten längsgerichteten Mittelachse (X20) zentriert ist und ein Innenvolumen (V20) zur Aufnahme des Steckerelements (2), eine Vorderseite und eine Rückseite definiert, das Buchsenelement ferner umfassend einen mittleren Stößel (44), der in Längsrichtung fest mit dem Körper verbunden und innerhalb des Innenvolumens angeordnet ist, sowie einen Schieber (46), der innerhalb des Innenvolumens um den zentralen Stößel zwischen einer vorgeschobenen Schließposition, in der der Schieber (46) dicht mit dem Körper (20) und dem mittleren Stößel (44) zusammenwirkt, und einer zurückgezogenen Öffnungsposition beweglich ist,
**dadurch gekennzeichnet, dass**
- der Körper einen äußeren Bund (22) bildet, der um das Innenvolumen (V20) angeordnet ist und eine äußere radiale Oberfläche (26A), eine vordere axiale Seite (24A) und eine hintere axiale Seite (24B) aufweist, wobei die vordere axiale Seite und die hintere axiale Seite parallel und ringförmig sind und radial von dem Rest des Körpers (20) hervorstehen,
- der äußere Bund mindestens zwei Durchgänge (32) umfasst, wobei jeder Durchgang durch den äußeren Bund verläuft und die äußere radiale Oberfläche (26A) und das Innenvolumen (V20) miteinander verbindet,
- eine distale Dichtung (40A) in dem Körper an einer radialen Innenfläche (26B) des Körpers (20) untergebracht ist, die das Innenvolumen (V20) und eine Vorderseite (68) des Schiebers (46) in der geschlossenen Position begrenzt, und die distale Dichtung (40A) in Längsrichtung auf beiden Seiten der Durchgänge (32) angeordnet sind, wobei sich die distale Dichtung vor den Durchgängen (32) befindet.

2. Buchsenelement (4) nach dem vorherigen Anspruch, **dadurch gekennzeichnet, dass** das Buchsenelement ferner eine vordere Dichtung (30A), die auf der vorderen axialen Seite (24A) untergebracht ist, und eine hintere Dichtung (30B), die auf der hinteren axialen Seite (24B) untergebracht ist, umfasst, wobei die vordere Dichtung und die hintere Dichtung auf der ersten Mittelachse (X20) zentriert sind.

3. Buchsenelement (4) nach einem der vorherigen Ansprüche, **dadurch gekennzeichnet, dass** eine mittlere Ebene (P40) einer distalen Nut (40), die die distale Dichtung (40A) aufnimmt, in Längsrichtung zwischen der vorderen axialen Seite (24A) und der hinteren axialen Seite (24B) des Bunds (22) angeordnet ist.

4. Buchsenelement (4) nach einem der vorherigen Ansprüche, **dadurch gekennzeichnet, dass** jeder Durchgang (32) ein äußeres Volumen (32A), das an der äußeren radialen Oberfläche (26A) des Bunds (22) mündet, sowie ein Volumen mit reduziertem Querschnitt (32B) in Bezug auf das äußere Volumen (32A) umfasst, wobei das Volumen mit reduziertem Querschnitt (32B) im Bezug auf das äußere Volumen (32A) innen ist.

5. Buchsenelement (4) nach Anspruch 4, **dadurch gekennzeichnet, dass** im Querschnitt in einer Ebene orthogonal zu der ersten Mittelachse (X20) Trennwände (t32), die das Volumen mit reduziertem Querschnitt (32B) begrenzen, aufgeweitet sind und in Richtung des Innenvolumens (V20) divergieren.

6. Buchsenelement (4) nach einem der Ansprüche 4 oder 5, **dadurch gekennzeichnet, dass** der Bund (22) zwei Durchgänge (32) umfasst, die 180° um die erste Mittelachse (X20) verteilt sind, und dass jedes Volumen mit reduziertem Querschnitt (32B) einen Winkelsektor (a) von 45° bis 100° um die erste Mittelachse abdeckt.

7. Buchsenelement (4) nach einem der Ansprüche 4, 5 oder 6, **dadurch gekennzeichnet, dass** eine Breite (£32) des Volumens mit reduziertem Querschnitt (32B), genommen entlang der ersten Mittelachse (X20), mindestens zweimal kleiner ist als eine orthoradiale Abmessung (L32) des Volumens mit reduziertem Querschnitt (32B).

8. Buchsenelement (4) nach einem der vorherigen Ansprüche, **dadurch gekennzeichnet, dass** eine proximale Dichtung (42A) in dem Körper (20) in einer proximalen Nut (42) untergebracht ist, die in einen Abschnitt der radialen Innenfläche (26B2) mit demselben Durchmesser wie ein Abschnitt der radialen Innenfläche (26B1) mündet, in den eine distale Nut (40) mündet, in der die distale Dichtung (40A) untergebracht ist, und dass, in der geschlossenen Position des Schiebers (46) die proximale Dichtung (42A) radial zwischen dem Schieber und dem Körper (20) eingefügt ist.

9. Buchsenelement (4) nach einem der vorherigen Ansprüche, **dadurch gekennzeichnet, dass** der Körper (20) ein ringförmiges Volumen (34) begrenzt, durch das jeder Durchgang (32) in dem Innenvolumen (V20) mündet, wobei ein Durchmesser (d34) des ringförmigen Volumens (34) größer ist als der Durchmesser (d22) eines Abschnitts der radialen Innenfläche (26B1), an dem eine distale Nut (40) mündet, in der die distale Dichtung (40A) untergebracht ist.

10. Buchsenelement (4) nach einem der vorherigen Ansprüche, **dadurch gekennzeichnet, dass** das Buchsenelement ein Hindernis (28) umfasst, das in Bezug auf den Körper (20) um die erste Mittelachse (X20) drehfest ist und sich radial von der radialen Außenfläche (26A) des Bunds (22) erstreckt.

11. Buchsenelement (4) nach einem der vorherigen Ansprüche, **dadurch gekennzeichnet, dass** der mittlere Stößel (44) eine ebene Vorderseite (58) aufweist und dass die Vorderseite (68) des Schiebers (46) und die Vorderseite (58) des Stößels (44) bündig sind, wenn der Schieber in der vorgeschobenen Schließposition ist.

12. Anschlussuntereinheit (74), umfassend einen Rahmen (72), **dadurch gekennzeichnet, dass** sie auch ein Buchsenelement (4) nach einem der vorherigen Ansprüche umfasst, dass der Rahmen einen inneren Kanal (76) und eine innere Aufnahme (V72) begrenzt, die innere Aufnahme (V72) eine zweite längsgerichtete Mittelachse (X72) parallel zu der ersten Mittelachse (X20) definiert, wobei das Buchsenelement (4) in der inneren Aufnahme (V72) des Rahmens (72) mit der Möglichkeit einer Bewegung des Körpers (20) in dem Rahmen (72) radial zu der zweiten Mittelachse (X72) montiert ist, wobei die vordere axiale Fläche (24A) des äußeren Bunds (22) in dichtem Gleitkontakt mit dem Rahmen und die hintere axiale Fläche (24B) des äußeren Bunds (22) in dichtem Gleitkontakt mit dem Rahmen ist, während der innere Kanal (76) des Rahmen mit dem Innenvolumen (V20) des Buchsenelements in Verbindung ist, wobei der Rahmen (72) mindestens zwei Öffnungen (86) begrenzt, die in der innere Aufnahme (V72) gegenüber dem äußeren Bund (22) in einer Richtung radial zu der zweiten Mittelachse (X72) münden.

13. Anschlussuntereinheit (74) nach dem vorherigen Anspruch, **dadurch gekennzeichnet, dass** eine der Öffnungen (86) mit einer Druckluftquelle verbunden ist.

14. Anschlussuntereinheit (74) nach einem der Ansprüche 12 oder 13, **dadurch gekennzeichnet, dass** das Buchsenelement (4) nach Anspruch 10 ist und dass das Hindernis (28) des Buchsenelements (4) mit dem Rahmen (72) in einer Umfangsrichtung zu der ersten Mittelachse (X20) zusammenwirkt, um den Körper (20) im Bezug auf den Rahmen in einer Konfiguration, in der jede der Öffnungen (86) in einer radialen Richtung mindestens einem der Durchgänge (32) gegenüberliegt, gegen Drehung zu blockieren.

15. Anschluss (R), **dadurch gekennzeichnet, dass** er ein Buchsenelement (4) nach einem der Ansprüche 1 bis 11 und ein Steckerelement (2), das in der gekoppelten Konfiguration des Anschlusses in dem Innenvolumen (V20) des Körpers (20) eingeführt wird, umfasst, eine ringförmige Stirnfläche (12A) des Steckerelements (2) die Schublade (46) in die zurückgezogene Öffnungsposition drückt, und dass die distale Dichtung (40A) eine radiale Außenfläche (6C) des Steckerelements in einer mittleren Entkopplungskonfiguration berührt, in der der Schieber in der vorgeschobenen Schließposition ist.

## Claims

1. A female element (4) of a coupler (R), the female element being able to be coupled with a male element (2) for the removable fluid junction of two pipes, the female element comprising a body (20) centered on a first longitudinal central axis (X20) and defining an inner volume (V20) for receiving the male element (2), a front side and a rear side, the female element further comprising a central plunger (44) longitudinally secured to the body and positioned within the inner volume, as well as a slide valve (46) movable within the inner volume around the central plunger, between a forward closing position, in which the slide valve (46) cooperates tightly with the body (20) and the central plunger (44), and a withdrawn open position,
**characterized in that**
- the body forms an outer flange ring (22) positioned around the inner volume (V20) and having an outer radial surface (26A), a front axial face (24A) and a rear axial face (24B), the front axial face and the rear axial face being parallel and annular and protruding radially from the rest of the body (20),
- the outer flange ring comprises at least two passages (32), each passage being arranged through the outer flange ring and linking the outer radial surface (26A) and the inner volume (V20),
- a distal sealing gasket (40A) is housed in the body at an inner radial surface (26B) of the body (20) delimiting the inner volume (V20) and
- a front face (68) of the slide valve (46) in the closed position and the distal sealing gasket (40A) are positioned longitudinally on either side of the passages (32), while the distal sealing gasket is located in front of the passages (32).

2. The female element (4) according to the preceding claim, **characterized in that** the female element further comprises a front sealing gasket (30A) housed on the front axial face (24A) and a rear sealing gasket (30B) housed on the rear axial face (24B), the front sealing gasket and the rear sealing gasket being centered on the first central axis (X20).

3. The female element (4) according to any one of the preceding claims, **characterized in that** a median plane (P40) of a distal groove (40) housing the distal sealing gasket (40A) is positioned longitudinally between the front axial face (24A) and the rear axial face (24B) of the flange ring (22).

4. The female element (4) according to any one of the preceding claims, **characterized in that** each passage (32) comprises an outer volume (32A) that emerges on the outer radial surface (26A) of the flange ring (22), as well as a volume of reduced section (32B) relative to the outer volume (32A), the volume of reduced section (32B) being inner relative to the outer volume (32A).

5. The female element (4) according to claim 4, **characterized in that**, in section in a plane orthogonal to the first central axis (X20), the volume of reduced section (32B) is delimited by walls (t32) that are flared and diverge toward the inner volume (V20).

6. The female element (4) according to any one of claims 4 or 5, **characterized in that** the flange ring (22) comprises two passages (32) that are distributed at 180° about the first central axis (X20) and **in that** each volume of reduced section (32B) covers an angular sector (α) of 45° to 100° about the first central axis.

7. The female element (4) according to one of claims 4, 5 or 6, **characterized in that** a width (132) of the volume of reduced section (32B) taken along the first central axis (X20) is at least two times smaller than an orthoradial dimension (L32) of the volume of reduced section (32B).

8. The female element (4) according to any one of the preceding claims, **characterized in that** a proximal sealing gasket (42A) is housed in the body (20) in a proximal groove (42) emerging on an inner radial surface portion (26B2) of equal diameter to an inner radial surface portion (26B1) on which a distal groove (40) emerges in which the distal sealing gasket (40A) is housed and **in that**, in the closed position of the slide valve (46), the proximal sealing gasket (42A) is radially interposed between the slide valve and the body (20).

9. The female element (4) according to any one of the preceding claims, **characterized in that** the body (20) delimits an annular volume (34) by which each passage (32) emerges in the inner volume (V20), a diameter (d34) of the annular volume (34) being greater than a diameter (d22) of an inner radial surface portion (26B1) on which a distal groove (40) emerges in which the distal sealing gasket (40A) is housed.

10. The female element (4) according to any one of the preceding claims, **characterized in that** the female element comprises an obstacle (28), blocked in rotation relative to the body (20) about the first central axis (X20) and extending radially from the outer radial surface (26A) of the flange ring (22).

11. The female element (4) according to any one of the preceding claims, **characterized in that** the central plunger (44) has a planar front face (58) and **in that** the front face (68) of the slide valve (46) and the front face (58) of the plunger (44) are flush when the slide valve is in the forward closed position.

12. A coupler subassembly (74) comprising a frame (72), **characterized in that** it also comprises a female element (4) according to any one of the preceding claims, **in that** the frame delimits an inner duct (76) and an inner housing (V72), the inner housing (V72) defining a second longitudinal central axis (X72) parallel to the first central axis (X20), the female element (4) being mounted in the inner housing (V72) of the frame (72) with the possibility of movement of the body (20) and the frame (72) radially with respect to the second central axis (X72), with the front axial face (24A) of the outer flange ring (22) in tight sliding contact with the frame and the rear axial face (24B) of the outer flange ring (22) in tight sliding contact with the frame, while the inner duct (76) of the frame communicates with the inner volume (V20) of the female element, the frame (72) delimiting at least two orifices (86) emerging in the inner housing (V72) across from the outer flange ring (22) in a direction radial to the second central axis (X72).

13. The connection subassembly (74) according to the preceding claim, **characterized in that** one of the orifices (86) is connected to a pressurized air source.

14. The connection subassembly (74) according to one of claims 12 or 13, **characterized in that** the female element (4) is according to claim 10 and **in that** the obstacle (28) of the female element (4) cooperates with the frame (72) in a circumferential direction with respect to the first central axis (X20) in order to block the rotation of the body (20) relative to the frame in a configuration where each of the orifices (86) is across, in a radial direction, from at least one of the passages (32).

15. A coupler (R), **characterized in that** it comprises a female element (4) according to any one of claims 1 to 11 and a male element (2) that, in the coupled configuration of the coupler, is introduced into the inner volume (V20) of the body (20), an annular front face (12A) of the male body (2) pushing the slide valve (46) back into the withdrawn open position, and **in that** the distal sealing gasket (40A) is in contact with an outer radial surface (6C) of the male element in an intermediate uncoupling configuration in which the slide valve is in the forward closed position.
